# EUROPÄISCHE PATENTSCHRIFT

(11) **EP 1 580 341 B1**
(45) Veröffentlichungstag und Bekanntmachung des Hinweises auf die Patenterteilung: **28.04.2010**
(21) Anmeldenummer: 05004615.0
(22) Anmeldetag: 03.03.2005
(51) Int. Cl.: E04B 2/76, F16B 7/18, F16B 7/04

(54) **Verbindugselement für eine Profilkonstruktion und Profilkonstruktion**
Connecting element for a profile construction and profile construction
Élément de liaison pour une construction de profilés et construction de profilés

(30) Priorität: 13.03.2004 DE 102004013631
(43) Veröffentlichungstag der Anmeldung: 28.09.2005
(73) Patentinhaber: MiniTec Maschinenbau GmbH & Co. KG, 66914 Waldmohr (DE)
(72) Erfinder: Neumüller, Axel, 66989 Höheischweiler (DE); Risch, Karl-Heinz, 57410 Gros Redering (FR)
(74) Vertreter: Klein, Friedrich Jürgen

(56) Entgegenhaltungen:
- EP-A- 0 136 264
- DE-A1- 4 210 456
- DE-U1- 9 304 726
- FR-A- 2 330 898
- US-A- 2 996 159

## Beschreibung

Die Erfindung betrifft eine Profilkonstruktion mit mindestens zwei Profilstäben mit jeweils mindestens einer mit einer Hinterschneidung versehenen Längsnut und mit mindestens einem Verbindungselement zur lösbaren Verbindung der beiden Profilstäbe.

In vielen Bereichen der Technik werden für die Herstellung von rahmenartigen Gestellen Profilkonstruktionen eingesetzt, die im wesentlichen von horizontal und vertikal angeordneten Profilstäben gebildet sind, die im Bereich ihrer Eckpunkte mittels Verbindungsstücken lösbar miteinander verbunden werden. Werden hierbei möglichst wenige unterschiedliche Profilstäbe und Verbindungsstücke benutzt, so läßt sich hiermit ein Baukastensystem bilden, das es erlaubt, mit relativ wenig technischem Aufwand Rahmen oder Regale unterschiedlicher Ausführungsarten herzustellen.

In der DE-41 27 284 C1 ist eine Profilkonstruktion beschrieben, deren Profilstäbe jeweils mindestens eine mit einer Hinterschneidung versehene Längsnut aufweisen, wobei zumindest in einem Teil der Profilstäbe im Bereich ihrer stirnseitigen Enden ein parallel zur Längsnut verlaufendes Gewinde zur Aufnahme einer Befestigungsschraube erforderlich ist. Mit der Befestigungsschraube wird an der Stirnseite des ersten Profilstabes ein T-förmiges Haltestück arretiert, das in die Längsnut des mit dem ersten Profilstab zu verbindenden zweiten Profilstabes so eingreift, daß es die Stege der Hinterschneidung der Längsnut hintergreift. Das Haltestück ist ferner mit einem Innengewinde zur Aufnahme einer zweiten Schraube versehen, die sich mit ihrem einen Ende gegen die Befestigungsschraube derart abstützt, daß das Haltestück so gegen die Stege der Hinterschneidung gedrückt wird, daß die Profilstäbe über das Haltestück fest miteinander verbunden werden.

Diese Lösung bietet zwar den Vorteil, daß der Endbereich des horizontal angeordneten zweiten Profilstabes auf der Stirnfläche des ersten Profilstabes aufliegt und das Haltestück selbst bei großer Belastung des zweiten Profilstabes nur die relativ geringen Verschiebekräfte aufnehmen muß, jedoch ist hierbei nachteilig, dass das Haltestück an der Stirnfläche des ersten Profilstabes befestigt wird und somit nur Eck-Verbindungen möglich sind.

Die DE-101 19 548 zeigt eine Profilkonstruktion mit im Abstand zueinander angeordneten vertikalen Profilstäben, die die Möglichkeit bietet, an beliebiger Stelle derselben nachträglich horizontale Profilstäbe einzusetzen, ohne hierzu die Profilkonstruktion zumindest teilweise demontieren zu müssen. Dabei sind zur Verbindung der beiden vertikalen Profilstäbe mit den jeweiligen Enden des horizontalen Profilstabes zwei jeweils zweiteilig ausgebildete Befestigungsmittel vorgesehen, wovon die jeweils eine Hälfte der Be-festigungsmittel an einer Längsseite der vertikal angeordneten Profilstäbe befestigt wird, während die jeweils andere Hälfte der beiden Befestigungsmittel an den Stirnseiten des horizontal angeordneten Profilstabes befestigt wird. Die Verbindung der jeweiligen Hälfte der Befestigungsmittel mit den Profilstäben erfolgt hierbei jeweils mittels eines in die Längsnut der Profilstäbe einzubringenden Nutensteins zusammen mit einer entsprechenden Befestigungsschraube.

Zum Einsetzen des horizontalen Profilstabes werden die an diesem befestigten Hälften der Befestigungsmittel in die an den beiden Profilstäben befestigten Hälften der Befestigungsmittel eingehängt, wonach die jeweils ein Befestigungsmittel bildenden Hälften derselben mittels einer Schraube lösbar miteinander verbunden werden.

Eine derartige Lösung bietet zwar den Vorteil eines einfachen nachträglichen Einsetzens eines im rechten Winkel zu den beiden vertikal gerichteten Profilstäben verlaufenden Profilstabes, jedoch ist hierbei zu beachten, daß der horizontal verlaufende Profilstab nur unter Zwischenschaltung der zusätzlichen Befestigungsmittel mit den beiden anderen Profilstäben verbunden werden kann. Bei Verwendung einer derartigen Profilkonstruktion als Tragrahmen für eine in die Längsnut des horizontalen Profilstabes einzusetzende Scheibe oder Trennwand ist hierbei nachteilig, daß diese im Bereich von zwei Ecken ausgeklinkt werden muss.

Schließlich zeigt die DE-U-9304726 eine insbesondere für den Regalbau vorgesehene Gerüstkonstruktion, die mit hinterschnittenen Längsnuten versehene Profilstäbe umfasst, die mittels Winkelverbindern und entsprechenden Schraubverbindungen miteinander verbunden werden. Die Winkelverbinder weisen in der Seitenansicht die Form eines rechtwinklig gleichschenkligen Dreieckes auf, an dessen Schenkelaußenflächen Stegvorsprünge ausgebildet sind, deren Breite der Breite der Nutenöffnungen entspricht. Zur Verbindung des Profilstabes mit dem jeweiligen Winkelverbinder ist an diesem eine Durchgangsbohrung für eine Befestigungsschraube vorgesehen, die mit einer innerhalb der Längsnut des Profilstabes anzuordnenden Mutter zusammenwirkt, die von einem der stirnseitigen Enden des Profilstabes in dessen Nut eingeschoben wird.

Diese Lösung gewährt zwar eine relativ große Gestaltungsfreiheit, ist aber mit dem Nachteil behaftet, daß der Winkelverbinder mit seinen Außenflächen stets an den Außenseiten des jeweiligen Profilstabes anliegt und bei miteinander verbundenen Profilstäben deren Eckbereich verdeckt, so dass auch die Enden der jeweiligen Nuten im Bereich der Winkelverbinder verdeckt und unzugänglich sind.

Dies ist insbesondere dann von Nachteil, wenn in eine bestehende Profilkonstruktion, beispielsweise in eine Regalanlage ein zusätzlicher Profilstab, beispielsweise eine zusätzliche Stütze oder eine zusätzliche horizontale Verstärkung eingebracht werden soll.

Der Erfindung liegt daher die Aufgabe zu Grunde, eine Verbindung für im Winkel zueinander anzuordnende Profilstäbe einer Profilkonstruktion zu schaffen, die einerseits weder eine zentrale Profilbohrung noch eine mechanische Bearbeitung der Profilstäbe erfordert, und andererseits die Möglichkeit eines nachträglichen Einbaues eines Profilstabes zwischen zwei im Abstand zueinander angeordnete Profilstäbe einer Profilkonstruktion bietet, wobei gleichzeitig sichergestellt sein soll, daß die Außenflächen der miteinander verbundenen Profilstäbe frei von Verbindungsteilen sind, und letztere an den Außenflächen der Profilkonstruktion auch nicht sichtbar sind.

Ausgehend von einem Verbindungselement zur lösbaren Verbindung von mindestens zwei im Winkel zueinander angeordneten Profilstäben mit jeweils mindestens einer, durch einen Boden und zwei parallel zu diesem verlaufende Stege begrenzten Hinterschneidung versehenen Längsnut aufweisend zwei im Winkel zueinander angeordnete Schenkel mit jeweils einem Befestigungsmittel, die an den Profilstäben befestigbar sind, wird diese Aufgabe dadurch gelöst,
dass die Breite der beiden Schenkel im Wesentlichen der Breite der Längsnut in deren nicht hinterschnittenem Bereich entspricht
und die beiden Schenkel an der Längsseite des Profilstabes zwischen den Stegen bzw. dem nicht hinterschnittenen Bereich der Längsnut des Profilstabes hindurch in deren hinterschnittenen Bereich einführbar sind,
wobei die Breite der mit mindestens einem Innengewinde versehenen Befestigungsmittel im Wesentlichen der Breite des hinterschnittenen Bereiches der Längsnut entspricht
und die Dicke von als die Befestigungsmittel dienenden Vierkantmuttern so bemessen ist, dass diese hochstehend an der Längsseite des Profilstabes durch die Längsnut hindurch in den hinterschnittenen Bereich der Längsnut einführbar sind,
wobei die Breite des Befestigungsmittels breiter als die Breite der Längsnut im Bereich der Stege ist, so dass das Befestigungsmittel hochstehend um einen bestimmten Betrag zwischen den Stegen hindurch geführt und dabei geringfügig in eine Schräglage gebracht werden kann, sodass es flach auf dem Boden der Längsnut zum Aufliegen kommen kann, und von da über den Schenkel des Verbindungselementes geschoben und auf diesem positioniert werden kann, sodass die Schenkel innerhalb des hinterschnittenen Bereiches der Längsnut durch die Befestigungsmittel befestigbar sind.

Hierdurch kann, beispielsweise beim Einsetzen eines horizontalen Profilstabes zwischen zwei im Abstand zueinander und vertikal angeordnete Profilstäbe, zunächst der erste Schenkel des Verbindungselementes zusammen mit dem diesem zugeordneten Befestigungsmittel von einer Stirnseite des horizontalen Profilstabes her in dessen Längsnut bzw. in den Bereich der Hinterschneidung eingeschoben und so positioniert werden, daß der zweite Schenkel dieses Verbindungselementes um einen bestimmten Betrag gegenüber der Stirnseite des horizontalen Profilstabes vorsteht. Durch Eindrehen der Befestigungsschraube in das Innengewinde des Befestigungsmittels wird dieser Schenkel des Verbindungselementes im Profilstab befestigt, wobei sich die Oberseite des Befestigungsmittels an der Unterseite der die Hinterschneidung begrenzenden Stege des Profilstabes und die Befestigungsschraube sich am Boden der Längsnut abstützt.

Alternativ hierzu können zunächst der erste Schenkel des Verbindungselementes und das erste Befestigungsmittel an der Längsseite des Profilstabes zwischen den Stegen und durch die Längsnut hindurch in den Bereich der Hinterschneidung der Längsnut eingeführt und zueinander positioniert werden. Da die Breite des Befestigungsmittels breiter als die Breite der Längsnut im Bereich der Stege ist, wird das Befestigungsmittel hochstehend um einen bestimmten Betrag zwischen den Stegen hindurchgeführt und dabei geringfügig in eine Schräglage gebracht, sodaß es flach auf dem Boden der Längsnut aufliegt und von da über den Schenkel des Verbindungselementes geschoben und auf diesem positioniert werden kann.

Durch Eindrehen der Befestigungsschraube in das Innengewinde des Befestigungsmittels wird der erste Schenkel des Verbindungselementes in der gleichen Weise im Profilstab befestigt, wobei sich die Oberseite des Befestigungsmittels ebenfalls an der Unterseite der die Hinterschneidung begrenzenden Stege des Profilstabes und die Befestigungsschraube sich am Boden der Längsnut abstützt.

Anschließend werden sowohl der gegenüber der Stirnseite des horizontalen Profilstabes vorstehende Bereich des ersten Schenkels als auch der zweite Schenkel des Verbindungselementes und das dem zweiten Schenkel des Verbindungselementes zugeordnete zweite Befestigungsmittel zwischen den Stegen des ersten vertikal angeordneten Profilstabes in den Bereich der Hinterschneidung der Längsnut desselben eingeführt. Unter der Voraussetzung, daß die beiden Stirnseiten des vertikal angeordneten Profilstabes zum Einführen des Befestigungsmittels für diesen Schenkel des Verbindungselementes nicht zugänglich sind, wird das Befestigungsmittel oberhalb des Schenkels hochstehend durch die Längsnut hindurch in den Profilstab eingeschoben und dabei etwas um seine Längsachse gedreht, sodaß es zwischen den Schenkel des Verbindungselementes und der Innenseite der Stege am Schenkel zur Anlage kommt. Beim Festziehen der Befestigungsschraube stützt sich diese an der Innenseite des Schenkels ab, wodurch dieser mit seiner Außenseite am Boden der Längsnut und das Befestigungsmittel an der Innenseite der Stege zur Anlage kommt.

Die so zwischen dem horizontalen und dem vertikalen Profilstab gebildete Verbindung zeichnet sich dadurch aus, das einerseits an keiner der Außenseiten der Profilstäbe ein Verbindungselement sichtbar ist, und selbst der Eckbereich der jeweiligen Profilstäbe vollkommen frei von Teilen der Verbindung ist.

Da die Länge des horizontal anzuordnenden Profilstabes dem lichten Abstand der beiden vertikal angeordneten Profilstäbe entspricht, und die an sich noch freie Stirnseite des horizontalen Profilstabes an der Außenseite des zweiten vertikalen Profilstabes anliegt, wurde das zum Verbinden des zweiten Endes des horizontalen Profilstabes mit dem zweiten vertikal angeordneten Profilstab dienende zweite Verbindungselement entweder gleichzeitig mit dem ersten Verbindungselement in die Längsnut des horizontalen Profilstabes eingebracht oder ist jetzt in zur Lage des ersten Verbindungselementes spiegelbildlicher Lage an beliebiger Stelle der Längsnut des horizontalen Profilstabes von oben durch diese hindurch in den horizontalen Profilstab einzusetzen.

Zum Einsetzen des ersten Befestigungsmittels des zweiten Verbindungselementes in die Längsnut des horizontalen Profilstabes wird dieses hochstehend durch die Längsnut hindurch in den Profilstab eingeschoben und dabei etwas um seine Längsachse gedreht, sodaß es zunächst flach auf dem Boden der Längsnut aufliegt und von da über den ebenfalls flach auf dem Boden aufliegenden Schenkel des Verbindungselementes geschoben und auf diesem positioniert werden kann.
Anschließend wird das zweite Verbindungselement in der Längsnut des horizontalen Profilstabes gleitend mit seinem zweiten Schenkel in die entsprechende Längsnut des zweiten vertikalen Profilstabes eingeschoben und sodann das zweite Befestigungsmittel für dieses Verbindungselement in der vorbeschriebenen Weise in die Längsnut eingebracht. Nach dem Positionieren des Befestigungsmittels am zweiten Schenkel des Verbindungselementes werden die beiden Befestigungsschrauben angezogen und damit die Verbindung auch des zweiten Endes horizontalen Profilstabes mit dem zweiten senkrecht angeordneten Profilstab fertig gestellt.

In einer vorteilhaften Weiterbildung der Befestigungsmittel, die eine Führung derselben im Bereich der Hinterschneidung der Längsnut der Profilstäbe gewährleistet, sind die beiden Befestigungsmittel eines jeden Verbindungselementes von je einer Vierkantmutter gebildet, deren Schlüsselweite im wesentlichen der Breite des Bereiches der Hinterschneidung der Längsnut entspricht.

Sofern die Vierkantmuttern an ihrer Unterseite eine abgeflachte Kuppe aufweisen, lassen sich diese relativ einfach zum jeweiligen Schenkel der Verbindungselemente positionieren.

Eine handhabungstechnisch günstige Ausbildung der Verbindungselemente läßt sich dadurch erreichen, daß eines der Befestigungsmittel und der erste Schenkel des Verbindungselementes einstückig ausgebildet sind.

Eine weitere Erleichterung des Positionierens der jeweiligen Vierkantmutter zum jeweiligen Schenkel des Verbindungselementes wird dann erreicht, wenn das freie Ende des entsprechenden Schenkels eine als Auflaufschräge für die Vierkantmutter dienende Abschrägung aufweist.

Eine Erhöhung der Tragfähigkeit der Verbindung zwischen dem jeweiligen Profilstab und dem jeweils zweiten Schenkel des Verbindungselementes läßt sich dadurch erzielen, daß die Außenfläche des jeweils zweiten Schenkels des Verbindungselementes mit einer Zahnung versehen ist, sodaß die Haltekraft des Reibungschlusses zwischen Profilstab und Verbindungselement durch den zusätzlichen Formschluß erhöht wird.

Sofern der erste Schenkel des Verbindungselementes und das Befestigungsmittel einstückig ausgebildet sind, ist es zur Bestimmung der Relativlage zwischen dem Verbindungselement und dem Profilstab vorteilhaft, wenn der erste Schenkel zwei an der Außenseite des zweiten Profilstabes zur Anlage kommende Anschlagflächen aufweist, wobei die Anschlagflächen mit einer Zahnung versehen sein können.

Weitere Einzelheiten und Vorteile der Erfindung ergeben sich anhand der Beschreibung von in der beigefügten Zeichnung dargestellten Ausführungsbeispielen der Erfindung.

Es zeigt:
- **Fig. 1**:: eine schaubildliche Darstellung einer ersten Ausführungsform eines Verbindungselementes für eine Profilkonstruktion;
- **Fig. 2**:: eine schaubildliche Darstellung einer zweiten Ausführungsform eines Verbindungselementes für eine Profilkonstruktion;
- **Fig. 3**:: eine schaubildliche Darstellung eines Längsschnittes eines horizontal angeordneten Profilstabes mit in diesen eingesetzten Verbindungselementen;
- **Fig. 4**:: eine schaubildliche Darstellung einer Eckverbindung zweier einen flachen Querschnitt aufweisenden Profilstäbe unter Verwendung von zwei Verbindungselementen.
- **Fig. 5**:: eine schaubildliche Darstellung eines Längsschnittes einer Eckverbindung mit zwei spiegelbildlich übereinander angeordneten Verbindungselementen;

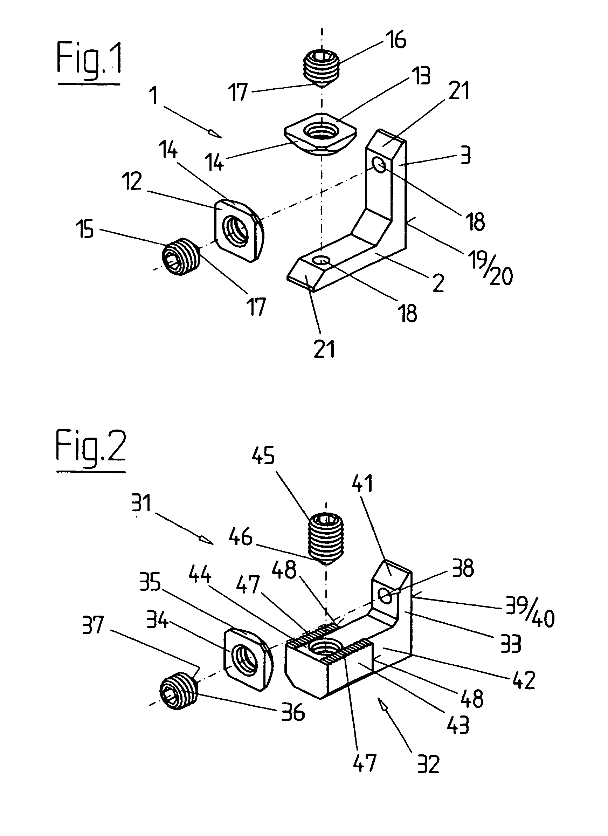

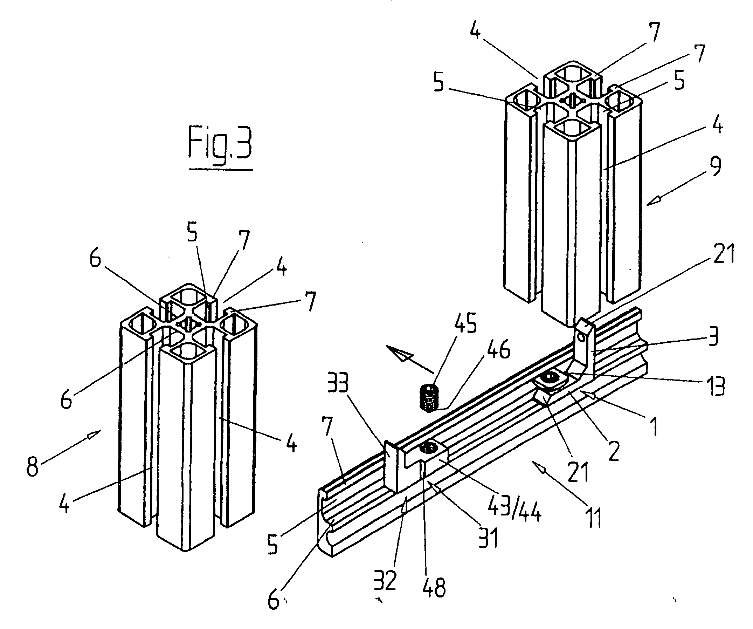

In Fig. 1 ist eine erste Ausführungsform eines zur Verwendung in einer Profilkonstruktion zum Verbinden von im Winkel zueinander angeordneten Profilstäben vorgesehenen Verbindungselementes 1 dargestellt, das im wesentlichen winkelförmig ausgebildet ist, und -bezogen auf die überwiegend vorkommende Gebrauchslage- einen ersten, im wesentlichen horizontal gerichteten Schenkel 2 und einen zweiten, im wesentlichen vertikal gerichteten Schenkel 3 aufweist, die fest miteinander verbunden sind und gleiche Breite aufweisen.
Die miteinander zu verbindenden Profilstäbe sind von bekannter Bauart und können eine rechteckförmige oder quadratische oder jede beliebige andere Querschnittsform aufweisen. Gemeinsam ist hierbei allen Profilstäben, daß sie an einer oder mehreren ihrer Außenseiten eine oder mehrere parallel zu ihrer Längsrichtung verlaufende Nuten aufweisen, die sich über ihre gesamte Länge ertrecken und daher als "Längsnuten 4" bezeichnet werden. Unabhängig von der Querschnittsform der Profilstäbe sind sämtliche Längsnuten 4 mit einer Hinterschneidung versehen und weisen somit einen hinterschnittenen Bereich 5 auf, der durch einen Boden 6 und zwei parallel zu diesem verlaufende Stege 7 begrenzt wird, so wie dies beispielsweise in Fig. 3 dargestellt ist, die zwei in bestimmtem Abstand angeordente und vertikal gerichtete Profilstäbe 8,9 sowie einen horizontal angeordneten Profilstab 11 zeigt, der mit den beiden Profilstäben 8,9 verbunden werden soll.

Die Breite der beiden Schenkel 2,3 des Verbindungselementes 1 entspricht im wesentlichen der Breite der Längsnut 4 der Profilstäbe und ist so gewählt, daß das Verbindungselement 1 in den Längsnuten 4 der Profilstäbe nahezu spielfrei gleiten kann. Jedem der beiden Schenkel 2,3 ist ein als Befestigungsmittel dienende Vierkantmutter 12,13 zugeordnet, deren jede mit einem nicht näher bezeichneten Innengewinde versehen ist. Die Vierkantmuttern 12,13 weisen eine quadratische Form auf, deren Schlüsselweite im wesentlichen der Breite des hinterschnittenen Bereiches 5 der Längsnuten 4 entspricht, sodaß sie innerhalb des hinterschnittenen Bereiches 5 der Längsnuten 4 verschieblich sind. An ihrer Unterseite sind die Vierkantmuttern 12, 13 mit jeweils einer kalottenähnlichen Kuppe 14 versehen. Mit der Vierkantmutter 12 wirkt eine Befestigungsschraube 15 und mit der Vierkantmutter 13 eine Befestigungsschraube 16 zusammen. Beide Befestigungsschrauben 15,16 sind als Innensechskantschrauben ausgebildet und können je eine Art Körnerspitze 17 aufweisen, die sich an den einander zugekehrten Flächen der beiden Schenkel 2,3 abstützen. Um eine Lagezuordnung zwischen den jeweiligen Schenkeln 2,3 des Verbindungselementes 1 und den Befestigungsschrauben 15,16 zu erleichtern, ist an jedem der beiden Schenkel 2,3 eine Ankörnung 18 vorgesehen. Die Dicke der beiden Vierkantmuttern 12, 13 ist so bemessen, daß diese sich hochstehend durch die Längsnuten 4 hindurch in den hinterschnittenen Bereich 5 derselben einführen lassen. Dabei ist die Dicke der Vierkantmuttern 12, 13 und die Dicke der Schenkel 2,3 so aufeinander abgestimmt, daß sich die Verbindungselemente 1 mit auf ihren Schenkeln 2,3 aufliegenden, bzw an diesen anliegenden Vierkantmuttern 12, 13 innerhalb der hinterschnittenen Bereiche 5 der Längsnuten 4 relativ leicht verschieben lassen.

An der Außenfläche 19 des vertikalen Schenkels 3 kann zur Erhöhung der Tragfähigkeit des Kraftschlusses zwischen dem jeweiligen Profilstab und dem Schenkel 3 eine Zahnung 20 vorgesehen sein. Wie aus Fig. 1 ersichtlich, sind die freien Enden der beiden Schenkel 2,3 mit jeweils einer als Ablaufschräge dienenden Schrägfläche 21 versehen.

In Fig. 2 ist eine zweite Ausführungsform eines zur Verwendung in einer Profilkonstruktion zum Verbinden von im Winkel zueinander angeordneten Profilstäben vorgesehenen Verbindungselementes 31 dargestellt, das ebenfalls im wesentlichen winkelförmig ausgebildet ist, und -bezogen auf die überwiegend vorkommende Gebrauchslage- einen ersten, im wesentlichen horizontal gerichteten Schenkel 32 und einen zweiten, im wesentlichen vertikal gerichteten Schenkel 33 aufweist, die fest miteinander verbunden sind.

Die Breite des vertikalen Schenkels 33 des Verbindungselementes 31 entspricht im wesentlichen der Breite der Längsnut 4 der Profilstäbe 8, 9 und 11 und ist ebenfalls so gewählt, daß der Schenkel 33 des Verbindungselementes 31 in den Längsnuten 4 der Profilstäbe 8,9 nahezu spielfrei gleiten kann. Dem Schenkel 33 ist eine als Befestigungsmittel dienende Vierkantmutter 34 zugeordnet, die mit einem nicht näher bezeichneten Innengewinde versehen ist. Die Vierkantmutter 34 weist ebenfalls eine quadratische Form auf, deren Schlüsselweite im wesentlichen der Breite des hinterschnittenen Bereiches 5 der Längsnuten 4 entspricht, sodaß sie innerhalb des hinterschnittenen Bereiches 5 der Längsnuten 4 verschieblich ist. An ihrer Unterseite ist die Vierkantmutter 34 mit einer kalottenähnlichen Kuppe 35 versehen. Mit der Vierkantmutter 34 wirkt eine Befestigungsschraube 36 zusammen. Diese ist als Innensechskantschraube ausgebildet und kann eine Art Körnerspitze 37 aufweisen, die sich an der dem Schenkel 32 zugekehrten Fläche des Schenkels 33 abstützt. Um eine Lagezuordnung zwischen dem jeweiligen Schenkel 33 des Verbindungselementes 31 und der Befestigungsschrauben 36 zu erleichtern, ist am Schenkel 33 eine Ankörnung 38 vorgesehen.
Die Dicke der Vierkantmutter 34 ist ebenfalls so bemessen, daß sich diese hochstehend durch die Längsnuten 4 hindurch in den hinterschnittenen Bereich 5 derselben einführen läßt. Dabei sind die Dicke der Vierkantmutter 34 und die Dicke des Schenkel 33 so abgestimmt, daß sich das Verbindungslement 31 mit an ihrem Schenkel 33 anliegender Vierkantmutter 34 innerhalb der hinterschnittenen Bereiche 5 der Längsnuten 4 relativ leicht verschieben läßt.
Auch hier kann an der Außenfläche 39 des vertikalen Schenkels 33 zur Erhöhung der Tragfähigkeit des Kraftschlusses zwischen dem jeweiligen Profilstab und dem Schenkel 33 des Verbindungselementes 31 eine Zahnung 40 vorgesehen sein. Wie aus Fig. 2 ersichtlich, ist das freie Ende des Schenkels 33 mit jeweils einer als Ablaufschräge dienenden Schrägfläche 41 versehen.

Der im wesentlichen horizontal gerichtete Schenkel 32 weist in seinem mit dem Schenkel 33 verbundenen Bereich 42 die gleiche Breite wie der Schenkel 33 auf, sodaß sich auch der Bereich 42 des Schenkels 32 nahezu spielfrei innerhalb der Längsnuten 4 der Profilstäbe verschieben läßt.

Im Bereich seines vorderen Endes weist der horizontal gerichtete Schenkel 32 einen Ansatz 43 auf, der als Befestigungsmittel 44 dient. Die Breite des Befestigungsmittels 44 entspricht der Breite des hinterschnittenen Bereiches 5 der Längsnuten 4. Die Höhe des Befestigungsmittels 44 ist etwas geringer als der Abstand zwischen dem Boden 6 und der Unterseite der Stege 7, sodaß sich das Befestigungsmittel 44 leichtgängig innerhalb des hinterschnittenen Bereiches 5 der Längsnuten 4 verschieben läßt. Das Befestigungsmittel 44 ist mit einem nicht näher bezeichneten durchgängigen Innengewinde versehen, mit dem eine als Innensechskantschraube ausgebildete Befestigungsschraube 45 zusammenwirkt, die an ihrer Unterseite eine Körnerspitze 46 aufweisen kann. Beim Eindrehen der Befestigungsschraube 45 in das Innengewinde des Befestigungsmittels 44 stützt sich die Befestigungsschraube 45 am Boden 6 des hinterschnittenen Bereiches 5 ab, wodurch die Oberseite des Befestigungsmittels 44 kraftschlüssig an der Unterseite der Stege 7 anliegt. Um die Tragfähigkeit dieses Kraftschlusses zu erhöhen, ist das Befestigungsmittel 44 an den beiden Randbereichen seiner Oberseite mit einer Zahnung 47 versehen.
Durch die unterschiedlichen Breiten des Bereiches 42 des Schenkels 32 und des Befestigungsmittels 44 sind am Schenkel 32 zwei vertikale Anschlagflächen 48 gebildet, die beim Einschieben des Verbindungselementes 31 in die jeweilige Längsnut 4 der Profilstäbe 8,9 an deren Außenflächen zur Anlage kommen. Auch die Anschlagflächen 48 können mit einer Zahnung 49 versehen sein.

In einer bevorzugten Weiterbildung dieser Ausführungsform kann das Befestigungsmittel 44 vorgesehene Innengewinde in einem spitzen Winkel zum Schenkel 33 angeordnet sein, sodaß beim Eindrehen der Befestigungsschraube 45 in das Innengewinde eine Axialkraft auf den Schenkel 33 des Verbindungselementes 31 wirkt.

In Fig. 3 ist ein Längsschnitt durch einen horizontal angeordneten Profilstab 11 gezeigt, der zwischen zwei vertikal angeordnete Profilstäbe 8,9 eingesetzt werden soll, die einen nicht veränderbaren gegenseitigen Abstand aufweisen und dessen Stirnseiten nicht zugänglich sind. Dies ist stets dann der Fall, wenn in ein bestehendes Gestell oder ein Regal nachträglich eine Querstrebe eingebaut werden soll. Ferner ist davon ausgegangen, daß die Länge des einzusetzenden horizontal angeordneten Profilstabes 11 dem lichten Abstand der beiden vertikalen Profilstäbe 8,9 entspricht.
Um hierbei gleichzeitig die Wirkungsweisen beider vorbeschriebenen Ausführungsformen erläutern zu können, wird -bezogen auf Fig. 3- für die rechte Verbindung ein Verbindungselement gemäß der ersten Ausführungsform und für die linke Verbindung ein Verbindungselement gemäß der zweiten Ausführungsform verwendet, wobei davon ausgegangen wird, daß die Länge des einzusetzenden Profilstabes 11 der Länge des lichten Abstandes der beiden Profilstäbe 8,9 entspricht.

Da die beiden stirnseitigen Enden des horizontal angeordneten Profilstabes 11 frei sind, wird der Schenkel 2 des Verbindungselementes 1 in der in Fig. 3 gezeigten Lage zusammen mit der Vierkantmutter 13 und in diese eingesetzter Befestigungsschraube 16 von rechten Ende des Profilstabes 11 in den hinterschnittenen Bereich 5 seiner Längsnut 4 eingeschoben. Die Vierkantmutter 13 liegt auf dem Schenkel 2 auf, wobei sich die Oberseite der Vierkantmutter 13 unterhalb der den hinterschnittenen Bereich 5 der Längsnut 4 begrenzenden Stege 7 befindet. Um ein Herausfallen des Schenkels 2 samt Vierkantmutter 13 und Befestigungsschraube 16 zu vermeiden, kann letztere so weit angezogen werden, daß sich das Verbindungselement 1 innerhalb des Profilstabes 11 zwar noch leicht verschieben läßt, ein Herausfallen aber verhindert wird.

Gleichzeitig hierzu kann der Schenkel 32 des Verbindungselementes 31 zusammen mit dem mit ihm einstückig ausgebildeten Befestigungsmittel 44 und der Befestigungsschraube 45 in der in Fig. 3 gezeigten Lage von linken Ende des Profilstabes 11 in den hinterschnittenen Bereich 5 seiner Längsnut 4 eingeschoben werden, wobei sich die Oberseite des Befestigungsmittels 44 unterhalb der den hinterschnittenen Bereich 5 der Längsnut 4 begrenzenden Stege 7 befindet. Auch hier kann durch leichtes Anziehen der Befestigungsschraube 45 ein Herausfallen des Verbindungselementes 31 vermieden werden.

In dieser vormontierten Lage wird der Profilstab 11 so zwischen den beiden Profilstäben 8,9 positioniert, daß sich seine Längsnut 4 genau gegenüber den beiden senkrecht verlaufenden Längsnuten 4 der Profilstäbe 8,9 befindet. In dieser Position des horizontal angeordneten Profilstabes 11 werden die beiden Verbindungselemente 1 bzw 31 mit ihrem jeweiligen senkrechten Schenkel 3 bzw 33 in die beiden Längsnuten 4 der Profilstäbe 8,9 eingeführt und positioniert. Bei der zweiten Ausführungsform des Verbindungselementes kommen die Anschlagflächen 48 an den Außenseiten der Profilstäbe 8,9 zur Anlage und bilden eine Begrenzung für die Einführtiefe des Verbindungselementes 31 in die jeweilige Längsnut 4 der Profilstäbe 8,9 wobei dann, wenn das im Befestigungsmittel 44 vorgesehene Innengewinde im spitzen Winkel zur vertikalen verläuft über die Zahnung 47 eine Zugkraft auf den Profilstab aufgebracht.

Zum Einbringen der beiden Vierkantmuttern 12 bzw 34 in die jeweilige Längsnut 4 der beiden Profilstäbe 8,9 werden die Vierkantmuttern 12,34 in hochstehender Lage oberhalb des jeweiligen Schenkels 3 bzw 33 in die jeweilige Längsnut 4 eingeführt und bei diesem Einführen etwas gedreht, sodaß sie innerhalb des hinterschnittenen Bereiches 5 wie in einem Führungskanal nach abwärts gleiten und auf die jeweilige Schrägfläche 21 bzw 41 des Schenkels 3 bzw 33 auftreffen und zwischen die Innenseiten der Schenkel 3 bzw 33 und der Stege 7 gelangen. In dieser Position der Vierkantmuttern 12,34 werden die Befestigungsschrauben 16 und 45 bzw 15 und 37 festgezogen, womit die Verbindung zwischen dem Profilstab 11 und den Profilstäben 8,9 beidendig fertig gestellt ist.

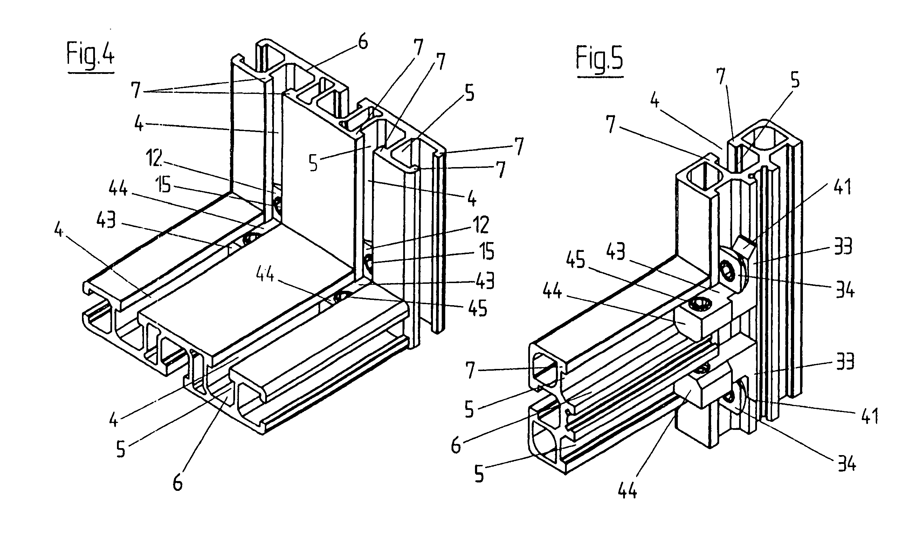

Die Anwendungsmöglichkeit der Erfindung ist selbstverständlich nicht auf das nachträgliche Einsetzen eines Profilstabes zwischen zwei im Abstand zueinander angeordenet Profilstäbe begrenzt. Vielmehr können Eckverbindungen an Profilstäben beliebigen Querschnittes hergestellt werden. So zeigt Fig. 4 eine Eckverbindung an einen flachen Querschnitt aufweisenden Profilstäben, die unter Verwendung von zwei nebeneinander angeordneten Verbindungselementen hergestellt ist.

Fig. 5 zeigt einen Längsschnitt einer besonders tragfähigen Eckverbindung, bei welcher zwei Verbindungselemente spiegelbildlich übereinander angeordnet sind.

## Patentansprüche

1. Verbindungselement zur lösbaren Verbindung von mindestens zwei im Winkel zueinander angeordneten Profilstäben mit jeweils mindestens einer, durch einen Boden (6) und zwei parallel zu diesem verlaufende Stege (7) begrenzten Hinterschneidung (5) versehenen Längsnut (4), aufweisend zwei im Winkel zueinander angeordnete Schenkel (2,3) mit jeweils einem Befestigungsmittel (12, 13), die an den Profilstäben befestigbar sind,
**dadurch gekennzeichnet,**
**dass** die Breite der beiden Schenkel (2,3) im Wesentlichen der Breite der Längsnut (4) in deren nicht hinterschnittenem Bereich entspricht,
und die beiden Schenkel (2,3) an der Längsseite des Profilstabes zwischen den Stegen 7 bzw. dem nicht hinterschnittenen Bereich der Längsnut (4) des Profilstabes hindurch in deren hinterschnittenen Bereich (5) einführbar sind,
wobei die Breite der mit mindestens einem Innengewinde versehenen Befestigungsmittel (12,13) im Wesentlichen der Breite des hinterschnittenen Bereiches (5) der Längsnut (4) entspricht,
und die Dicke von als Befestigungsmittel dienenden Vierkantmuttern (34) so bemessen ist, dass diese hochstehend an der Längsseite des Profilstabes durch die Längsnut (4) hindurch in den hinterschnittenen Bereich (5) der Längsnut (4) einführbar sind,
wobei die Breite des Befestigungsmittels (12,13) breiter als die Breite der Längsnut (4) im Bereich der Stege (7) ist, sodass das Befestigungsmittel hochstehend um einen bestimmten Betrag zwischen den Stegen (7) hindurch geführt und dabei geringfügig in eine Schräglage gebracht werden kann, sodass es flach auf dem Boden der Längsnut (4) zum Aufliegen kommen kann, und von da über den Schenkel des Verbindungselementes geschoben und auf diesem positioniert werden kann,
sodass die Schenkel (2,3) innerhalb des hinterschnittenen Bereiches (5) der Längsnut (4) durch die Befestigungsmittel (12,13) befestigbar sind.

2. Verbindungselement nach Anspruch 1, **dadurch gekennzeichnet, dass** die Befestigungsmittel (12,13; 34,44) von je einer Vierkantmutter (12,13; 34,44) gebildet sind, deren Schlüsselweite im Wesentlichen der Breite des Bereiches der Hinterschneidung (5) der Längsnut (4) entspricht.

3. Verbindungselement nach Anspruch 2, **dadurch gekennzeichnet, dass** jede der Vierkantmuttern (12,13 34,44) an ihrer Unterseite eine kalottenartige Kuppe (14) aufweist.

4. Verbindungselement nach Anspruch 1, **dadurch gekennzeichnet, dass** eines der Befestigungsmittel (44) und dessen einer Schenkel (32) einstückig ausgebildet sind.

5. Verbindungselement nach Anspruch 1, **dadurch gekennzeichnet, dass** das freie Ende des zweiten Schenkels (3, 33) eine als Ablaufschräge dienende Schrägfläche (21, 41) aufweist.

6. Verbindungselement nach Anspruch 1, **dadurch gekennzeichnet, dass** die Außenfläche (19, 39) des zweiten Schenkels (3, 33) mit einer Zahnung (20, 40) versehen ist.

7. Verbindungselement nach Anspruch 1 und 4, **dadurch gekennzeichnet, dass** der erste Schenkel (32) zwei an der Außenseite des zweiten Profilstabes zur Anlage kommende Anschlagflächen (48) aufweist.

8. Verbindungselement nach Anspruch 7, **dadurch gekennzeichnet, dass** die Anschlagflächen (48) mit einer Zahnung (49) versehen sind.

9. Profilkonstruktion mit einer lösbaren Verbindung von mindestens zwei im Winkel zueinander angeordneten Profilstäben mit jeweils mindestens einer, durch einen Boden (6) und zwei parallel zu diesem verlaufende Stege (7) begrenzten Hinterschneidung (5) versehenen Längsnut (4), aufweisend ein Verbindungselement mit zwei im Winkel zueinander angeordneten Schenkeln (2,3) mit jeweils einem Befestigungsmittel (12,13), die an den Profilstäben befestigbar sind,
**dadurch gekennzeichnet**
**dass** die Breite der beiden Schenkel (2,3) im Wesentlichen der Breite der Längsnut (4) in deren nicht hinterschnittenem Bereich entspricht
und die beiden Schenkel (2,3) an der Längsseite des Profilstabes zwischen den Stegen 7 bzw. dem nicht hinterschnittenen Bereich der Längsnut (4) des Profilstabes hindurch in deren hinterschnittenen Bereich (5) einführbar sind,
wobei die Breite der mit mindestens einem Innengewinde versehenen Befestigungsmittel (12,13) im Wesentlichen der Breite des hinterschnittenen Bereiches (5) der Längsnut (4) entspricht,
und die Dicke von als Befestigungsmittel dienenden Vierkantmuttern (34) so bemessen ist, dass diese hochstehend an der Längsseite des Profilstabes durch die Längsnut (4) hindurch in den hinterschnittenen Bereich (5) der Längsnut (4) einführbar sind,
wobei die Breite des Befestigungsmittels (12,13) breiter als die Breite der Längsnut (4) im Bereich der Stege (7) ist, sodass das Befestigungsmittel hochstehend um einen bestimmten Betrag zwischen den Stegen (7) hindurch geführt und dabei geringfügig in eine Schräglage gebracht werden kann, sodass es flach auf dem Boden der Längsnut (4) zum Aufliegen kommen kann, und von da über den Schenkel des Verbindungselementes geschoben und auf diesem positioniert werden kann,
sodass die Schenkel (2,3) innerhalb des hinterschnittenen Bereiches (5) der Längsnut (4) durch die Befestigungsmittel (12,13) befestigbar sind.

10. Profilkonstruktion nach Anspruch 9, **dadurch gekennzeichnet, dass** die Befestigungsmittel (12,13; 34,44) von je einer Vierkantmutter (12,13; 34,44) gebildet sind, deren Schlüsselweite im wesentlichen der Breite des Bereiches der Hinterschneidung (5) der Längsnut (4) entspricht.

11. Profilkonstruktion nach Anspruch 9, **dadurch gekennzeichnet, dass** eines der Befestigungsmittel (44) und dessen einer Schenkel (32) einstückig ausgebildet sind.

12. Profilkonstruktion nach Anspruch 11, **dadurch gekennzeichnet, dass** die Vierkantmutter (34) an ihrer Unterseite eine kalottenartige Kuppe (14) aufweist.

13. Profilkonstruktion nach Anspruch 9, **dadurch gekennzeichnet, dass** das freie Ende des zweiten Schenkels (3, 33) eine als Ablaufschräge dienende Schrägfläche (21, 41) aufweist.

14. Profilkonstruktion nach Anspruch 9, **dadurch gekennzeichnet, dass** die Außenfläche (19, 39) des zweiten Schenkels (3, 33) mit einer Zahnung (20, 40) versehen ist.

15. Profilkonstruktion nach Anspruch 9, **dadurch gekennzeichnet, dass** der erste Schenkel (32) zwei an der Außenseite des zweiten Profilstabes zur Anlage kommende Anschlagflächen (48) aufweist.

16. Profilkonstruktion nach Anspruch 15, **dadurch gekennzeichnet, dass** die Anschlagflächen (48) mit einer Zahnung (49) versehen sind.

17. Profilkonstruktion nach Anspruch 9, **dadurch gekennzeichnet dass** die Außenfläche (39) des zweiten Schenkels (33) mit einer Zahnung (40) versehen ist.

## Claims

1. Connecting element for the detachable connection between at least two profile bars that are located at an angle one to the other, each having at least one longitudinal groove (4) provided with an undercut (5) that is defined by a bottom (6) and two webs (7) extending parallel to said bottom, said connecting element having two legs (2, 3) that are located at an angle one to the other, each having a securing means (12, 13) that is securable to the profile bars,
**characterized in that**
the width of the two legs (2, 3) corresponds substantially to the width of the longitudinal groove (4) in its non undercut region,
and on the longitudinal side of the profile bar between the webs 7 or the non undercut region of the longitudinal groove (4) of the profile bar, the two legs (2, 3) are insertable through into its undercut region (5),
wherein the width of the securing means (12, 13) provided with at least one internal thread corresponds substantially to the width of the undercut region (5) of the longitudinal groove (4),
and the thickness of square nuts (34) serving as securing means is dimensioned such that they are insertable standing upright on the longitudinal side of the profile bar through the longitudinal groove (4) into the undercut region (5) of the longitudinal groove (4),
wherein the width of the securing means (12, 13) is wider than the width of the longitudinal groove (4) in the region of the webs (7) so that the securing means standing upright can be guided through between the webs (7) by a certain amount and at the same time can be moved slightly into an inclined position such that it can come to rest flat on the bottom of the longitudinal groove (4), and from there can be pushed over the leg of the connecting element and positioned on said connecting element,
such that the legs (2, 3) are securable within the undercut region (5) of the longitudinal groove (4) by means of the securing means (12, 13).

2. Connecting element according to Claim 1, **characterized in that** the securing means (12, 13; 34, 44) are formed by a square nut each (12, 13; 34, 44), the width across flats of which corresponds substantially to the width of the region of the undercut (5) of the longitudinal groove (4).

3. Connecting element according to Claim 2, **characterized in that** each of the square nuts (12, 13, 34, 44) has a dome-like cone (14) on its underside.

4. Connecting element according to Claim 1, **characterized in that** one of the securing means (44) and its one leg (32) are realized in one piece.

5. Connecting element according to Claim 1, **characterized in that** the free end of the second leg (3, 33) has an inclined surface (21, 41) serving as discharge inclination.

6. Connecting element according to Claim 1, **characterized in that** the outside surface (19, 39) of the second leg (3, 33) is provided with a toothed arrangement (20, 40).

7. Connecting element according to Claim 1 and 4, **characterized in that** the first leg (32) has two stop faces (48) that abut against the outside of the second profile bar.

8. Connecting element according to Claim 7, **characterized in that** the stop faces (48) are provided with a toothed arrangement (49).

9. Profile construction with a detachable connection between at least two profile bars located at an angle one to the other, each having at least one longitudinal groove (4) provided with an undercut (5) that is defined by a bottom (6) and two webs (7) extending parallel to said bottom, said profile construction having a connecting element with two legs (2, 3) that are located at an angle one to the other, each having a securing means (12, 13) that is securable to the profile bars,
**characterized in that**
the width of the two legs (2, 3) corresponds substantially to the width of the longitudinal groove (4) in its non undercut region
and on the longitudinal side of the profile bar between the webs 7 or the non undercut region of the longitudinal groove (4) of the profile bar, the two legs (2, 3) are insertable through into its undercut region (5),
wherein the width of the securing means (12, 13) provided with at least one internal thread corresponds substantially to the width of the undercut region (5) of the longitudinal groove (4),
and the thickness of square nuts (34) serving as securing means is dimensioned such that they are insertable standing upright on the longitudinal side of the profile bar through the longitudinal groove (4) into the undercut region (5) of the longitudinal groove (4),
wherein the width of the securing means (12, 13) is wider than the width of the longitudinal groove (4) in the region of the webs (7) so that the securing means standing upright can be guided through between the webs (7) by a certain amount and at the same time can be moved slightly into an inclined position such that it can come to rest flat on the bottom of the longitudinal groove (4), and from there can be pushed over the leg of the connecting element and positioned on said connecting element,
such that the legs (2, 3) are securable inside the undercut region (5) of the longitudinal groove (4) by means of securing means (12, 13).

10. Profile construction according to Claim 9, **characterized in that** the securing means (12, 13; 34, 44) are formed by a square nut (12, 13, 34, 44) each, the width across flats of which corresponds substantially to the width of the region of the undercut (5) of the longitudinal groove (4).

11. Profile construction according to Claim 9, **characterized in that** one of the securing means (44) and its one leg (32) are realized in one piece.

12. Profile construction according to Claim 11, **characterized in that** the square nut (34) has a dome-like cone (14) on its underside.

13. Profile construction according to Claim 9, **characterized in that** the free end of the second leg (3, 33) has an inclined face (21, 41) serving as discharge inclination.

14. Profile construction according to Claim 9, **characterized in that** the outside surface (19, 39) of the second leg (3, 33) is provided with a toothed arrangement (20, 40).

15. Profile construction according to Claim 9, **characterized in that** the first leg (32) has two stop surfaces (48) that abut against the outside of the second profile bar.

16. Profile construction according to Claim 15, **characterized in that** the stop surfaces (48) are provided with a toothed arrangement (49).

17. Profile construction according to Claim 9, **characterized in that** the outer surface (39) of the second leg (33) is provided with a toothed arrangement (40).

## Revendications

1. Élément de liaison pour relier de façon amovible au moins deux tiges profilées disposées en angle l'une par rapport à l'autre à respectivement au moins une rainure longitudinale (4) pourvue d'une contre-dépouille (5) délimitée par un fond (6) et deux étais (7) s'étendant parallèlement à celui-ci, comportant deux bords (2, 3) disposés en angle l'un par rapport à l'autre avec respectivement un moyen de fixation (12, 13) chacun pouvant être fixés aux tiges profilées,
**caractérisé en ce que** :
la largeur des deux bords (2,3) correspond pour l'essentiel à la largeur de la rainure longitudinale (4), dans sa zone non contre-dépouillée ;
et les deux bords (2,3) pouvant être introduits au niveau du côté longitudinal de la tige profilée, entre les étais 7 et/ou la zone contre-dépouillée de la rainure longitudinale (4) de la tige profilée, dans sa zone contre-dépouillée (5) ;
la largeur des moyens de fixation (12, 13) pourvus d'au moins un filetage intérieur correspondant pour l'essentiel à la largeur de la zone contre-dépouillée (5) de la rainure longitudinale (4) ;
et l'épaisseur des écrous carrés (34) servant de moyens de fixation étant mesurée de telle sorte qu'ils peuvent, en étant à un niveau élevé au niveau du côté longitudinal de la tige profilée, être introduits dans la zone contre-dépouillée (5) de la rainure longitudinale (4) en passant à travers la rainure longitudinale (4) ;
la largeur du moyen de fixation (12, 13) étant plus large que la largeur de la rainure longitudinale (4) dans la zone des étais (7), de sorte que le moyen de fixation est introduit, en étant à un niveau élevé, d'une quantité donnée entre les étais (7) et peut ainsi être amené dans une position légèrement inclinée, de sorte qu'il peut reposer à plat sur le fond de la rainure longitudinale (4) et peut être poussé par les bords supérieurs de l'élément de liaison et peut être positionné sur lui ;
de sorte que les bords (2, 3) peuvent être fixés à l'intérieur de la zone (5) contre-dépouillée de la rainure longitudinale (4) au moyen des moyens de fixation (12, 13).

2. Élément de liaison selon la revendication 1, **caractérisé en ce que** les moyens de fixation (12, 13 ; 34, 44) sont formés respectivement par un écrou carré (12, 13 ; 34, 44) dont la largeur de clé correspond pour l'essentiel à la largeur de la zone de la contre-dépouille (5) de la rainure longitudinale (4).

3. Élément de liaison selon la revendication 2, **caractérisé en ce que** chacun des écrous carrés (12, 13 ; 34, 44) comporte au niveau de son côté inférieur un bout bombé (14) de type calotte.

4. Élément de liaison selon la revendication 1, **caractérisé en ce qu'**un des moyens de fixation (44) et son bord (32) sont réalisés d'un seul tenant.

5. Élément de liaison selon la revendication 1, **caractérisé en ce que** l'extrémité libre du deuxième bord (3, 33) comporte une position inclinée (21, 41) servant de biais tournant.

6. Élément de liaison selon la revendication 1, **caractérisé en ce que** la surface extérieure (19, 39) du deuxième bord (3, 33) est pourvue d'une denture (20, 40).

7. Élément de liaison selon les revendications 1 et 4, **caractérisé en ce que** le premier bord (32) comporte deux surfaces de butée (48) venant reposer contre le côté extérieur de la deuxième tige profilée.

8. Élément de liaison selon la revendication 7, **caractérisé en ce que** les surfaces de butée (48) sont pourvues d'une denture (49).

9. Construction de profilés avec une liaison amovible d'au moins deux tiges profilées disposées en angle l'une par rapport à l'autre avec respectivement au moins une rainure longitudinale (4) pourvue d'une contre-dépouille (5) délimitée par un fond (6) et deux étais (7) s'étendant parallèlement à lui, comportant un élément de liaison pourvu de deux bords (2, 3) disposés en angle l'un par rapport à l'autre avec respectivement un moyen de fixation (12, 13) pouvant être fixé aux tiges profilées ;
**caractérisée en ce que** :
la largeur des deux bords (2,3) correspond pour l'essentiel à la largeur de la rainure longitudinale (4) dans sa zone non contre-dépouillée ;
et les deux bords (2, 3) pouvant être introduits dans sa zone contre-dépouillée (5) au niveau du côté longitudinal de la tige profilée, entre les étais 7 et/ou la zone non contre-dépouillée de la rainure longitudinale (4) de la tige profilée ;
la largeur des moyens de fixation (12, 13) pourvue d'au moins un filetage intérieur correspondant pour l'essentiel à la largeur de la zone contre-dépouillée (5) de la rainure longitudinale (4) ;
et l'épaisseur des écrous carrés (34) servant de moyens de fixation étant mesurée de telle sorte que celle-ci peut être introduite, en étant à un niveau élevé au niveau du côté longitudinal de la tige profilée, à travers la rainure longitudinale (4), dans la zone contre-dépouillée (5) de la rainure longitudinale (4) ;
la largeur du moyen de fixation (12, 13) étant plus large que la largeur de la rainure longitudinale (4) dans la zone des étais (7), de sorte que le moyen de fixation est introduit d'une quantité donnée entre les étais (7) en étant à un niveau élevé et peut ainsi être amené légèrement dans une position inclinée, de façon à pouvoir reposer à plat sur le fond de la rainure longitudinale (4) et de là être positionné au-dessus du bord de l'élément de liaison et sur lui ;
de sorte que les bords (2, 3) peuvent être fixés à l'intérieur de la zone contre-dépouillée (5) de la rainure longitudinale (4) au moyen des moyens de fixation (12, 13).

10. Construction de profilés selon la revendication 9, **caractérisée en ce que** les moyens de fixation (12, 13 ; 34, 44) sont formés par respectivement un écrou carré (12, 13 ; 34, 44) dont la largeur de clé correspond pour l'essentiel à la largeur de la zone de la contre-dépouille (5) de la rainure longitudinale (4).

11. Construction de profilés selon la revendication 9, **caractérisée en ce qu'**un des moyens de fixation (44) et son bord (32) sont réalisés d'un seul tenant.

12. Construction de profilés selon la revendication 11, **caractérisée en ce que** l'écrou carré (34) comporte au niveau de son côté inférieur un bout bombé (14) de type calotte.

13. Construction de profilés selon la revendication 9, **caractérisée en ce que** l'extrémité libre du deuxième bord (3, 33) comporte une surface inclinée (21, 41) servant de biais tournant.

14. Construction de profilés selon la revendication 9, **caractérisée en ce que** la surface extérieure (19, 39) du deuxième bord (3, 33) est pourvue d'une denture (20, 40).

15. Construction de profilés selon la revendication 9, **caractérisée en ce que** le premier bord (32) comporte deux surfaces de butée (48) venant reposer contre le côté extérieur de la deuxième tige profilée.

16. Construction de profilés selon la revendication 15, **caractérisée en ce que** les surfaces de butée (48) sont pourvues d'une denture (49).

17. Construction de profilés selon la revendication 9, **caractérisée en ce que** la surface extérieure (39) du deuxième bord (33) est pourvue d'une denture (40).
